# EUROPÄISCHE PATENTSCHRIFT

(11) **EP 2 879 816 B1**
(45) Veröffentlichungstag und Bekanntmachung des Hinweises auf die Patenterteilung: **25.11.2020**
(21) Anmeldenummer: 12743975.0
(22) Anmeldetag: 06.08.2012
(51) Int. Cl.: B21D 28/10, B21D 45/00, B21D 45/04, B26D 7/18

(54) **VERFAHREN ZUM ENTNEHMEN EINES WERKSTÜCKTEILS UND WERKZEUGMASCHINE**
METHOD FOR REMOVING A WORKPIECE PART AND MACHINE TOOL
PROCÉDÉ POUR ENLEVER UNE PARTIE DE PIÈCE, ET MACHINE-OUTIL

(43) Veröffentlichungstag der Anmeldung: 10.06.2015
(73) Patentinhaber: Trumpf Werkzeugmaschinen GmbH + Co. KG, 71254 Ditzingen (DE)
(72) Erfinder: MATHIAS, Harald, 74357 Bönnigheim (DE); BELLON, Jochen, 71272 Renningen (DE); BECHTOLD, Martin, 74376 Gemmrigheim (DE)
(74) Vertreter: Mammel und Maser
(86) Internationale Anmeldenummer: PCT/EP2012/065326
(87) Internationale Veröffentlichungsnummer: WO 2014/023323

(56) Entgegenhaltungen:
- EP-A1- 0 348 311
- EP-A1- 2 177 293
- DE-A1- 19 616 204
- DE-U1- 20 107 571

## Beschreibung

Die Erfindung betrifft ein Verfahren zum Entnehmen eines durch trennendes Bearbeiten an einem plattenförmigen, auf einer Werkstückauflage einer Werkzeugmaschine aufliegenden Werkstücks gebildeten Werkstückteil aus einem Restwerkstück sowie eine Werkzeugmaschine, welche eine Werkstückauflage zur Auflage eines plattenförmigen Werkstücks sowie eine ortsfeste Bearbeitungseinrichtung zur Trennung des Werkstücks in ein Werkstückteil und ein Restwerkstück umfasst.

Beim trennenden Bearbeiten, insbesondere beim Stanzen oder (Laser-) Schneiden von plattenförmigen Werkstücken werden Werkstückteile durch Freistanzen oder Freischneiden aus dem Restwerkstück gebildet. Dabei entstehen Trennschnitte, die in der Regel weniger als 5 mm breit sind. Zum Entladen dieser Werkstückteile wird eine Handlingseinrichtung eingesetzt, welche das Werkstückteil greift und aus dem Restwerkstück abhebt und entfernt. Aufgrund des sehr kleinen Trennschnittes und ggf. auch durch das Verfahren des Restwerkstückes mit dem freigestanzten bzw. freigeschnittenen Werkstückteil auf der Werkstückauflage in eine Entnahmeposition kann es zum Verkanten oder Verhaken des Werkstückteils mit dem Restwerkstück kommen. Beim automatisierten Entnehmen solcher Werkstückteile wird über eine Entladeüberwachungseinrichtung geprüft, ob das zu entnehmende Werkstückteil mit dem Restwerkstück verhakt ist. Sofern dies der Fall sein sollte, wird ein Entnahmeversuch gestartet, indem die Handlingseinrichtung abgesenkt und das Werkstückteil ergriffen und anschließend angehoben wird. Sofern sich die Verhakung nicht löst, kommt es zu einer Unterbrechung des automatisierten Entnahmeprozesses und führt zum Stillstand der Werkzeugmaschine.

Aus der DE 196 16 204 A1 ist ein Verfahren zur automatischen Entnahme von Werkstücken aus einer Werkstückauflage bekannt, bei der ein zu entnehmendes Werkstück mittels Aushebestiften gegenüber dem Restwerkstück entlang einer Z-Achse nach oben verfahren wird, um darauffolgend das Werkstück mittels einer Greifeinrichtung zu entnehmen.

Durch die EP 2 177 293 A1 wird ein Verfahren für eine automatische Entnahme des Werkstückteils aus dem Restwerkstück vorgeschlagen, bei dem ein Anheben des zu entnehmenden Werkstückteils an seiner Unterseite mittels mindestens eines höhenverstellbaren Auflageelementes zum Verbringen mindestens eines Randbereichs des Werkstückteils in eine Entnahmeposition oberhalb des Restwerkstücks vorgesehen ist. Dabei wird ein Saugrahmen einer als Vakuumsauger ausgebildeten Handlingseinrichtung auf das Werkstück aufgesetzt und durch den Saugrahmen angesaugt. Gemeinsam wird das Werkstück mit einer Matrize und dem Saugrahmen nach oben bewegt, so dass das Werkstückteil in einer Ebene oberhalb des Restwerkstücks angeordnet ist. In einer solchen Entnahmeposition wird das Werkstückteil über den Saugrahmen abgehoben und in einem Entladebereich abgelegt.

Der Erfindung liegt die Aufgabe zugrunde, ein Verfahren zum Entnehmen eines Werkstückteils und eine Werkzeugmaschine bereit zu stellen, mit denen auf einfache Weise eine prozesssichere Entnahme von Werkstückteilen aus dem Restwerkstück ermöglicht wird.

Diese Aufgabe wird erfindungsgemäß durch ein Verfahren gemäß Anspruch 1 gelöst.

Dadurch kann eine Verhakung zwischen dem Werkstückteil und dem Restwerkstück zumeist gelöst werden, da die Verhakung zwischen dem Restwerkstück und dem Werkstückteil oftmals durch daran haftende Bearbeitungsrückstände oder eine geringe Gratbildung entsteht. Die Verhakung kann auch durch dynamische Verspannungen, wie beispielsweise thermische Verspannungen, im Werkstückteil entstehen, die sich nach dem letzten Trennschnitt zwischen dem Werkstückteil und dem Restwerkstück lösen. Solche Verhakungen können aber auch beim Aufsetzen der Handlingseinrichtung auf dem Werkstückteil verursacht werden.

Eine bevorzugte Ausgestaltung des Verfahrens sieht vor, dass die Verhakung beim Abheben des Werkstückteils aus dem Restwerkstück durch einen Kraftsensor oder durch ein Lösen des Werkstückteils von der Greifeinrichtung erfasst wird, wobei vorzugsweise das Lösen des Werkstückteils von der Greifeinrichtung bevorzugt mittels der Entladeüberwachungseinrichtung erfasst wird. Durch beide beispielhafte Ausführungsformen kann innerhalb der Prozessautomatisierung die Verhakung des Werkstückteils mit dem Restwerkstück erkannt werden, um daraufhin eine Lösestrategie zu starten.

Eine alternative Ausgestaltung des Verfahrens sieht vor, dass die Verhakung in einer Draufsicht auf das Werkstückteil mit der Entladeüberwachungseinrichtung erkannt wird. Durch eine solche optische Erfassung beziehungsweise Abfrage der Kontur des zu entnehmenden Werkstückteils kann ebenso eine Verhakung prozesssicher erfasst werden.

Eine bevorzugte Ausführungsform des Verfahrens sieht vor, dass die Verfahrbewegung der Halteeinrichtung und/oder Greifeinrichtung aus wenigstens einer, die vordefinierte Bahn erzeugende Verfahrstrecke gebildet wird, die von einem Startpunkt aus gestartet und in einen Endpunkt, der in dem Startpunkt liegt, beendet wird. Dadurch kann eine einfache Einbindung dieser Lösestrategie in den bisherigen automatischen Entladeprozess erfolgen, der von einer Entnahmeposition wie auch die Lösestrategie gestartet wird.

Eine alternative Ausführungsform zur automatisierten Werkstückteilentnahme sieht vor, dass die Verfahrbewegung der Halteeinrichtung und/oder der Greifeinrichtung in einem Startpunkt gestartet und in einem Endpunkt beendet wird, der getrennt zum Startpunkt liegt, vorzugsweise mit einem Abstand, der kleiner als die Breite eines Trennschnittes zwischen dem Werkstückteil und dem Restwerkstücks liegt. Diese alternative Ausführungsform kann bei sich schwer lösenden Verhakungen von Vorteil sein, um ein Lösen des Werkstückteils zum Restwerkstück zu erzielen und gleichzeitig das Werkstückteil wieder in dem freigeschnittenen Bereich im Restwerkstück für die nachfolgende Entnahme zu positionieren.

Eine erste Variante der Verfahrbewegung sieht vor, dass zwischen dem Startpunkt und dem Endpunkt eine Verfahrstrecke angesteuert wird, welche einen kreisförmigen oder elliptischen oder einen kreisbogenförmigen Bahnverlauf aufweist. Dadurch kann in jede Richtung der Ebene eine zumindest geringfügige und kontinuierliche Relativbewegung zwischen dem Werkstück und dem Restwerkstück erzielt werden, um die Verhakung zu lösen und anschließend eine verhakungsfreie Bewegung des Werkstückteils in eine Freischnittfläche im Restwerkstück zu ermöglichen.

Eine weitere Variante der Verfahrbewegung sieht vor, dass die Hand-lings--einrichtung und/oder Greifeinrichtung mit zumindest einer ersten Verfahrstrecke von einem Startpunkt zum zumindest einen Zwischenpunkt und zumindest eine weitere Verfahrstrecke von dem zumindest einen Zwischenpunkt zum Endpunkt angesteuert wird. Eine solche Lösestrategie ermöglicht im Unterschied zu der vorstehend genannten Verfahrbewegung mit einer kontinuierlichen Verfahrbewegung innerhalb der Verfahrstrecke eine Unterbrechung zwischen einer ersten und der zumindest einen zweiten Verfahrstrecke, so dass ein Wechsel zwischen der Richtung und/oder Geschwindigkeit zur ersten Verfahrstrecke ermöglicht ist. Dadurch können weitere spezifische Lösestrategien bestimmt werden.

Bei einer Ausführungsform mit einer Verfahrbewegung von mindestens zwei durch zumindest einen Zwischenpunkt getrennten Verfahrstrecken ist bevorzugt vorgesehen, dass die zumindest eine erste Verfahrstrecke entlang einer Geraden oder einer Kreisbahn in einer X-Y Ebene des auf der Werkstückauflage liegenden Werkstücks und die zumindest eine zweite Verfahrstrecke entlang einer Kreisbahn oder einer Geraden angesteuert wird. Bei dieser Ausführungsform, bei der bspw. die zumindest eine Verfahrstrecke zunächst entlang einer Geraden erfolgt, kann ein einfaches Lösen der Verhakung erzielt werden, wobei bei der sich zumindest einen daran anschließenden zweiten Verfahrstrecke entlang einer Kreisbahn ermöglicht wird, dass der Verhakungsbereich zwischen dem Werkstückteil und dem Restwerkgitter insbesondere an deren jeweiligen Kanten umfahren wird, so dass ein einfaches Lösen des Werkstückteils vom Restwerkstück gegeben ist.

Eine weitere alternative Ausgestaltung der Verfahrbewegung sieht vor, dass die zumindest eine erste Verfahrstrecke entlang einer Geraden in einer X- oder Y- Richtung oder in einer X-Y-Ebene der Werkstückauflage und die zumindest eine zweite Verfahrstrecke gegenläufig zur ersten Verfahrstrecke angesteuert wird. Diese Lösestrategie stellt eine einfache Ansteuerung der Haltevorrichtung und/oder Greifervorrichtung dar, in dem nur eine Achse der Handlingseinrichtung und/oder der Werkstückauflage für eine Hin- und Herbewegung angesteuert wird. Alternativ kann auch eine Ansteuerung von zwei Achsen vorgesehen sein, die eine Überlagerung der X- und Y-Richtung bilden und somit eine Verfahrbewegung in einer X-Y Ebene erzeugen.

Eine weitere alternative Ausgestaltung der Verfahrbewegung sieht vor, dass zumindest eine erste Verfahrstrecke der Halteeinrichtung und/oder Greifereinrichtung mit einer von der zumindest einen zweiten Verfahrstrecke der Halteeinrichtung und/oder Greifereinrichtung abweichenden Kreisbahn angesteuert wird. Dadurch kann eine weitere alternative Lösestrategie geschaffen werden.

Eine weitere bevorzugte Ausgestaltung der Verfahrbewegung der Halteeinrichtung und/oder Greifereinrichtung sieht vor, dass zumindest eine erste Verfahrstrecke entlang einer spiralförmigen Bahn verläuft. Dadurch kann es bei bspw. einem ruhenden Restwerkstück durch die zumindest einfache 360°-Drehung der Verfahrstrecke beim Abfahren der spiralförmigen Bahn zu einer Lösung der Verhakung kommen, insbesondere bei einer verhakten Ecke des Werkstückteils zum Restwerkstück. Analoges gilt bei einem ruhenden Werkstückteil und einem bewegten Restwerkstück.

Des Weiteren ist bevorzugt vorgesehen, dass die Verfahrbewegung, welche wenigstens eine, vorzugsweise drei Verfahrstrecken mit zumindest einem Zwischenpunkt umfasst, eine weitere Verfahrstrecke umfasst, die entlang einer vorzugsweise geschlossenen Kreisbahn angesteuert wird. Dadurch kann zunächst durch eine Hin- und Herbewegung oder einer teilweisen bogensegmentförmigen, kreisförmigen oder spiralförmigen Verfahrstrecke eine zusätzliche Lösebewegung durch das Durchfahren einer Kreisbahn, insbesondere geschlossenen Kreisbahn, nachgeschalten werden, so dass verschiedene Verfahrstrecken für eine Lösestrategie miteinander kombiniert werden.

Nach einer weiteren vorteilhaften Ausgestaltung des Verfahrens wird der Verfahrbewegung eine weitere Bewegungskomponente entlang einer Verfahrrichtung in Z-Richtung zumindest abschnittsweise überlagert. Durch das auch nur geringfügige Anheben des Werkstückteils oder des Restwerkstücks kann auch ein einfaches Lösen der Verhakung erzielt werden, insbesondere dann, wenn sich ein Eckbereich des Werkstücks zwischen der Werkstückauflage und dem Restwerkstück befindet.

Die zumindest eine Verfahrbewegung für die Lösestrategie kann auch eine ruckelige Hin- und Herbewegung oder eine ruckelige Drehbewegung der Halteeinrichtung und/oder Greifereinrichtung umfassen. Diese ruckelige Hin-und Herbewegung oder Drehbewegung kann isoliert oder ergänzend zu den vorbeschriebenen Verfahrbewegungen erfolgen.

Nach einer weiteren bevorzugten Ausgestaltung des Verfahrens kann vorgesehen sein, dass der zumindest einen Verfahrbewegung eine Hebe-oder Senkbewegung zumindest einer Bauteilkomponente der Werkstückauflage oder eine Bauteilkomponente in der Werkstückauflage überlagert wird. Bspw. kann in der Werkstückauflage eine Entnahmeklappe, insbesondere eine Laserentnahmeklappe, vorgesehen sein, welche abgesenkt werden kann, so dass eine Trennung des Werkstückteils und des Restwerkstücks ermöglicht wird.

Eine weitere bevorzugte Ausgestaltung des Verfahrens sieht vor, dass während dem Durchlaufen der Lösestrategie ein Freiwerden der Verhakung zwischen dem Werkstückteil und dem Restwerkstück mit der Entladeüberwachungseinrichtung überwacht und beim Erkennen des Lösens der Verhakung die Lösestrategie beendet wird. Diese Vorgehensweise weist den Vorteil auf, dass gegebenenfalls sich vorzeitig lösende Verhakungen vor dem vollständigen Durchlaufen der Lösestrategie erkannt und das Werkstückteil unmittelbar darauffolgend entnommen werden kann, wodurch eine Reduzierung der Prozessdauer ermöglicht wird.

Nachdem die automatische Werkstückteilentnahme bzw. die Lösestrategie durchfahren ist, wird die Position des Werkstückteils in dem Restwerkstück mit der Entladeüberwachungseinrichtung überprüft und beim Erkennen der weiterhin bestehenden Verhakung die Lösestrategie zumindest einmal wiederholt und beim Bestehen der Verhakung die Werkzeugmaschine stillgesetzt oder beim Erkennen der gelösten Verhakung der Entladevorgang für das Werkstückteil fortgesetzt.

Die der Erfindung zugrunde liegende Aufgabe wird des Weiteren durch eine Werkzeugmaschine gemäß Anspruch 15 gelöst. Dadurch kann eine hohe Flexibilität in der Verfahrbewegung für die automatisierte Entnahmeposition ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer erfindungsgemäßen Werkzeugmaschine,
Figur 2 eine schematisch vergrößerte Ansicht der Werkzeugmaschine gemäß Figur 1 mit einem Werkstückteil in einem Restwerkstück,
Figur 3 eine schematisch vergrößerte Ansicht der Werkzeugmaschine gemäß Figur 1 mit einer Handlings-einrichtung in einer Entnahmeposition,
Figuren 4a, b schematische Darstellungen eines verhakten Werkstückteils zum Restwerkstück,
Figuren 5a, b schematische Darstellungen einer ersten Alternative einer Verfahrbewegung einer Lösestrategie,
Figuren 6a, b schematische Darstellungen einer zweiten Alternative für eine Verfahrbewegung,
Figuren 7a, b schematische Darstellungen einer weiteren alternativen Verfahrbewegung,
Figur 8 eine schematische Darstellung einer weiteren alternativen Verfahrbewegung,
Figur 9 eine schematische Darstellung einer weiteren alternativen Verfahrbewegung,
Figur 10 eine schematische Darstellung einer weiteren alternativen Verfahrbewegung.

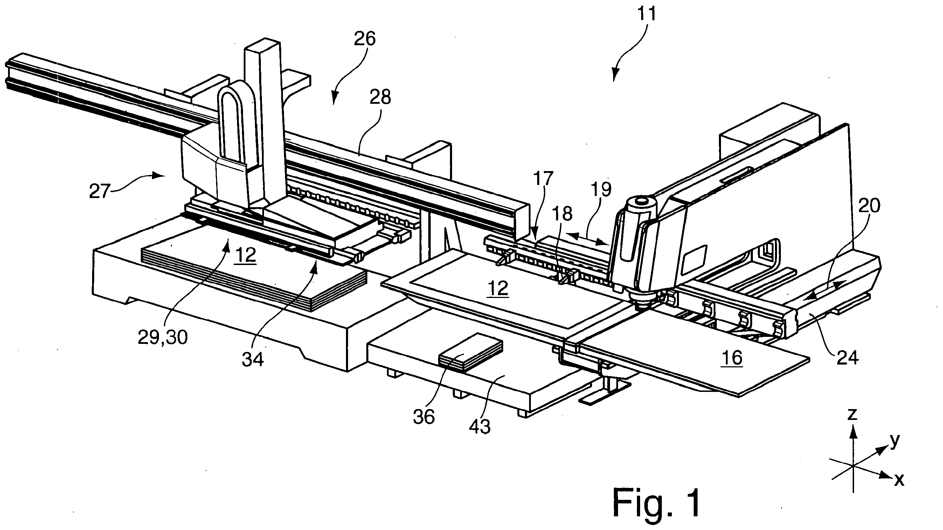

In Figur 1 ist perspektivisch eine erfindungsgemäße Werkzeugmaschine 11 dargestellt, welche bspw. als Laser-Stanzmaschine ausgebildet ist. Zur trennenden Bearbeitung eines plattenförmigen Werkstücks 12, bspw. in Form eines Bleches, ist ein Stanzkopf 14 mit einem nicht näher dargestellten Stanzstempel und ein Laserbearbeitungskopf 15 vorgesehen. Das zu bearbeitende Werkstück 12 liegt während der Werkstückbearbeitung auf einer Werkstückauflage 16 auf. Das Werkstück 12 wird während deren Bearbeitung mit einer Halteeinrichtung 17, welche vorzugsweise Klemmen 18 aufweist, gehalten und kann gegenüber dem Stanzkopf 14 und dem Laserbearbeitungskopf 15 in der X-Richtung der Werkstückebene (X-Y-Ebene) mittels eines durch einen Pfeil angedeuteten konventionellen Linearantriebes 19 verschoben werden. In Y-Richtung der Werkstückebene kann das Werkstück 12 bewegt werden, indem die Werkstückauflage 16 zusammen mit der Halteeinrichtung 17 relativ zu einer Unterlage 24, auf welcher die Werkstückauflage 16 gelagert ist, mittels eines durch einen Pfeil angedeuteten herkömmlichen Linearantriebs 20 verfahren werden.

Das Werkstück 12 lässt sich auf diese Weise in X- und Y-Richtung gegenüber dem Stanzkopf 14 und dem Laserbearbeitungskopf 15 verschieben, so dass der jeweils zu bearbeitende Bereich des Werkstücks 12 in einem ortsfesten Bearbeitungsbereich 21 des Stanzkopfes 14 bzw. einem ortsfesten Bearbeitungsbereich 22 des Laserbearbeitungskopfes 15 positioniert werden kann. Die Bearbeitungsbereiche 21, 22 können im selben Bereich der Werkstückauflage 16 liegen, wobei durch eine Verschiebebewegung der Werkstückauflage 16 gegenüber der Unterlage 24 der jeweiligen Bearbeitungsbereich 21 oder 22 eingenommen werden kann.

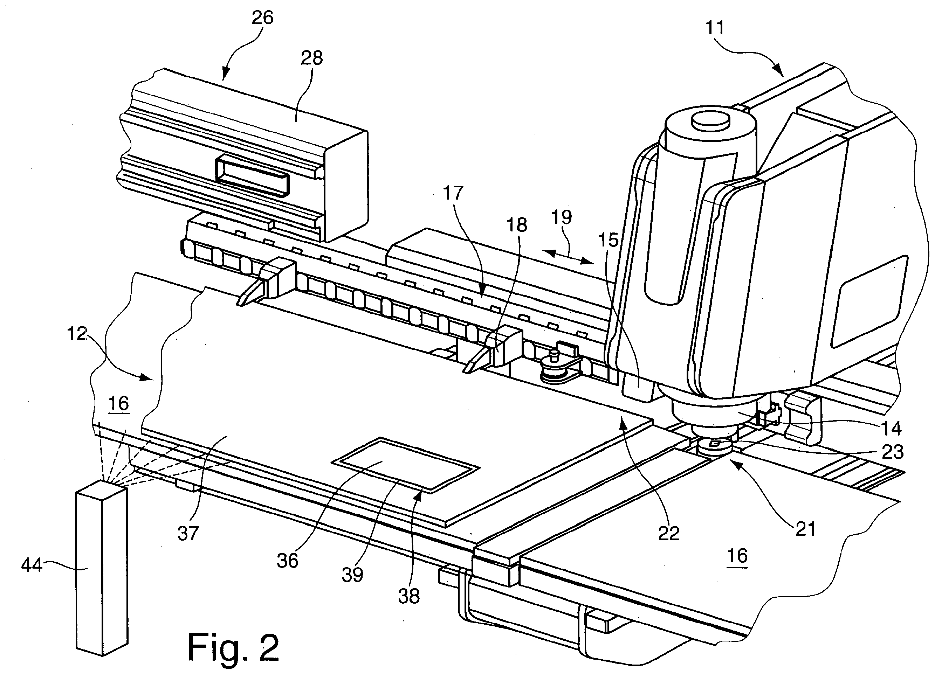

Im Bearbeitungsbereich 21 des Stanzkopfes 14 ist eine vorzugsweise auswechselbare Stanzmatrize 23 (Figur 2) positioniert. Entsprechend ist in dem ortsfesten Bearbeitungsbereich 22 des Laserbearbeitungskopfes 15 eine nicht näher dargestellte Lasermatrize angeordnet.

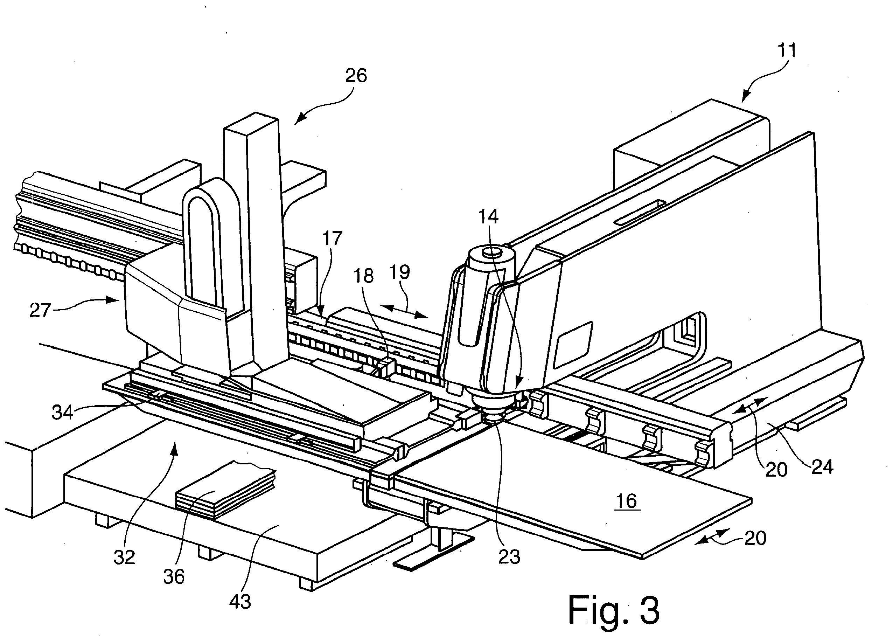

Der Werkstückauflage 16 der Werkzeugmaschine 11 an einer Stirnseite zugeordnet ist eine Handlingseinrichtung 26, welche eine Greifereinrichtung 27 umfasst, die entlang zumindest einer Linearachse 28 von einer Be- und Entladeposition 29, 30 in eine Entnahmeposition 32 (Figur 3) verfahrbar ist. Die Greifereinrichtung 27 kann beispielsweise als Magnetsauger, Vakuumsauger, Elektroadhäsionssauger oder als mechanischer Greifer ausgebildet sein. Im Ausführungsbeispiel ist schematisch ein Vakuumsauger dargestellt, der einen Saugrahmen 34 mit mehreren daran angeordneten Saugern umfasst. Der Saugrahmen 34 und/oder die einzelnen Sauger können zusätzlich zumindest in einer weiteren Achse entlang des X-Y-Z-Koordinatensystems mit zumindest einem Linearantrieb verfahrbar angetrieben sein.

In Figur 2 ist eine schematisch vergrößerte Ansicht eines Teils der Werkzeugmaschine 11 gemäß Figur 1 dargestellt. Auf der Werkstückauflage 16 liegt das Werkstück 10 auf, wobei durch die trennende Bearbeitung des Werkstücks 12 durch einen Trennschnitt ein Werkstückteil 36 in einem Restwerkstück 37 freigeschnitten ist. Das Restwerkstück 37 mit dem in einer Freischnittfläche 38 bleibenden Werkstückteils 36 ist mittels der Halteeinrichtung 17 aus dem Bearbeitungsbereich 21, 22 in die Entnahmeposition 32 verfahrbar. In dieser Entnahmeposition 32 wird zur automatisierten Entnahme des Werkstückteils 36 aus dem Restwerkstück 37 die Greifereinrichtung 27 positioniert, wie aus Figur 3 hervorgeht. Der Saugrahmen 34 wird abgesenkt, so dass nach dem Greifen des Werkstückteils 36 dieses angehoben wird und das Werkstückteil 36 von dem Restwerkstück 37 frei kommt, um anschließend das Werkstückteil 36 durch eine Verfahrbewegung der Greifeinrichtung 27 entlang der Linearachse 28 in die Entladeposition 30 überzuführen und das Werkstückteil 36 auf einem Magazin 43 oder Stapel abzulegen.

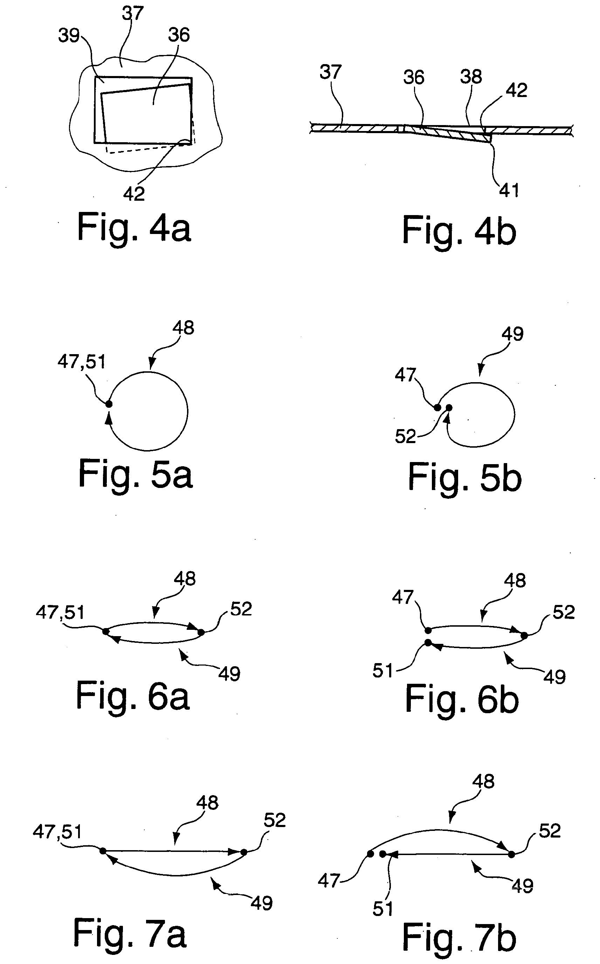

Während oder nach dem Freischneiden oder Freistanzen des Werkstückteils 36 aus dem Restwerkstück 37 kann es zu einer Verhakung des Werkstückteils 36 mit dem Restwerkstück 37 kommen. In den Figuren 4a und b ist eine solche Verhakung beispielhaft dargestellt. Ein Eckbereich 41 des Werkstückteils 36 liegt bspw. unterhalb eines Eckbereichs 42 des Restwerkstücks 37, so dass bei einer Entnahme des Werkstückteils 36, welches bislang durch ein Anheben des Werkstückteils 36 in Z-Richtung erfolgt, ein Lösen des Werkstückteils 36 von dem Restwerkstück 37 nicht möglich ist.

Bei einem automatisierten Entnahmeprozess wird bevorzugt vor der Entnahme des Werkstückteils 36 aus dem Restwerkstück 37 mittels einer Entladeüberwachungseinrichtung 44 geprüft, ob eine Verhakung de Werkstückteils 36 mit dem Restwerkstück 37 vorliegt. Sofern keine Verhakung festgestellt wird, erfolgt der Entnahmeprozess. Sofern eine Verhakung zwischen dem Werkstückteil 36 und dem Restwerkstück 37 besteht, wird eine Lösestrategie gestartet, um die Verhakung zu lösen.

Die Entladeüberwachungseinrichtung 44 kann beispielsweise, wie dies in Figur 2 dargestellt ist, als optische Überwachungseinrichtung ausgebildet werden, welche die Werkstückauflage 16 und das darauf aufliegende Werkstück 12 beziehungsweise das Restwerkstück 37 und das Werkstückteil 36 optisch abtastet, vorzugsweise mittels eines Lichtfächers abscannt. Dadurch kann insbesondere beim Anheben eines Werkstückteils 36 mittels der Greifeinrichtung 27 erkannt werden, ob sich das Werkstückteil 36 von der Greifeinrichtung 27 löst. Sofern dies der Fall ist, kann dies auf einer Verhakung beruhen, so dass darauf folgend die Lösestrategie gestartet wird. Die Entladeüberwachungseinrichtung 44 kann auch aus mehreren Komponenten bestehen. Zusätzlich können auch weitere, nicht optische Erkennungssensoren eingesetzt werden. Ebenso kann diese Entladeüberwachungseinrichtung 44 auch in einer Aufsicht auf die Werkstückauflage 16 arbeiten. Dies ist abhängig von der Konzeption der Werkzeugmaschine 11 und deren Linearachsen sowie der Positionierung des Stanzkopfes 14 und/oder Laserbearbeitungskopfes 15 zur Werkstückauflage 16.

In den nachfolgenden Figuren 5a bis 10 sind verschiedene Lösestrategien dargestellt, welche jeweils für sich betrachtet oder auch in Kombination und/oder Überlagerungen miteinander ausgeführt werden können.

In Figur 5a ist eine erste Lösestrategie dargestellt. Der Ausgangspunkt für diese Lösestrategie ist der Startpunkt 47. Der Startpunkt 47 entspricht der in Figur 3 dargestellten Anordnung, bei der die Halteeinrichtung 17 sowie die Handlingseinrichtung 26 mit der Greifereinrichtung 27 in der Entnahmeposition 32 angeordnet sind und die Greifereinrichtung 27 an dem Werkstückteil 36 angreift, wobei das Restwerkstück 37 durch die Halteeinrichtung 17 ergriffen ist und auf der Werkstückauflage 16 aufliegt. Diese Ausgangssituation gilt auch für die weiteren beschriebenen Lösungsstrategien.

Ausgehend von diesem Startpunkt 47 wird beispielsweise die Halteeinrichtung 17 entlang einer Verfahrstrecke 48 mit Bewegungskomponenten in der X- und Y-Ebene bewegt, die in einem Endpunkt 51 endet, welcher gemäß der Ausführungsform in Figur 5a deckungsgleich mit dem Startpunkt 47 ist. Die Verfahrstrecke 48 beschreibt dabei eine Kreisbahn. Alternativ zu dieser Kreisbahn können weitere Kurvenverläufe oder kreisbahnähnliche Verfahrstrecken vorgesehen sein, welche zwischen dem Startpunkt 47 und dem Endpunkt 51 liegen.

Bei dieser Lösestrategie wird gemäß einer ersten Ausführungsform das Werkstückteil 36 ortsfest gehalten. Alternativ kann vorgesehen sein, dass das Restwerkstück 37 ortsfest durch die Halteeinrichtung 17 zur Werkstückauflage 16 gehalten wird und die Greifereinrichtung 27 die Verfahrstrecke 48 durchläuft. Alternativ können auch die Halteeinrichtung 17 und die Greifereinrichtung 27 bewegt werden, so dass diese Verfahrstrecke 48 erzeugt wird.

In Figur 5b ist eine alternative Ausführungsform zu Figur 5a zur Lösestrategie dargestellt. Diese weicht dahingehend davon ab, dass der Startpunkt 47 und Endpunkt 51 nicht deckungsgleich sind, sondern der Endpunkt 51 benachbart zum Startpunkt 47 liegt. Im Übrigen gelten die Ausführungsformen und Varianten zu Figur 5a.

In Figur 6a ist eine weitere alternative Lösestrategie dargestellt. Diese umfasst beispielsweise zwei voneinander abweichende Verfahrstrecken, 48, 49. Ausgehend von einem Startpunkt 47 wird beispielsweise die Halteeinrichtung 17 entlang der ersten Verfahrstrecke 48 zu einem Zwischenpunkt 52 bewegt. Von diesem Zwischenpunkt 52 aus wird eine weitere Verfahrstrecke 49 angesteuert, die zum Endpunkt 51 führt, der wiederum deckungsgleich mit dem Startpunkt 47 ist. Die Verfahrstrecke 48, 49 sind gegensinnig und können bezüglich der Geschwindigkeit und/oder des Verfahrweges gleich sein.

Die Figur 6b unterscheidet sich von der Figur 6a lediglich dahingehend, dass der Endpunkt 51 benachbart zum Startpunkt 47 liegt.

Wie in den Figuren 6a und 6b dargestellt, sind die Verfahrstrecken 48, 49 leicht bogenförmig ausgebildet. Diese können auch entlang einer Geraden erfolgen, so dass beispielsweise die Verfahrstrecke 48, 49 nur eine Bewegungskomponente entlang einer Achse, also der X- oder Y-Achse, für eine Hin- und Herbewegung aufweist. Alternativ kann die Verfahrstrecke auch eine Überlagerung der X-Y-Richtung aufweisen. Des Weiteren kann eine Verfahrstrecke auch eine Bewegungskomponente in X- oder Y-Richtung und eine Bewegungskomponente in Z-Richtung aufweisen, so dass eine Lösestrategie mit einer Verfahrrichtung in einer X-Z-Ebene oder einer Y-Z-Ebene angesteuert wird.

In den Figuren 7a und 7b sind alternative Ausführungsformen zu den Figuren 6a und 6b dargestellt. Die Lösestrategie gemäß Figur 7a weicht von der in Figur 6a dahingehend ab, dass die erste und zweite Verfahrstrecke 48, 49 bezüglich des Verfahrweges und/oder der Verfahrgeschwindigkeit voneinander abweichen. Analoges gilt für die Figur 7b im Vergleich zur Figur 6b.

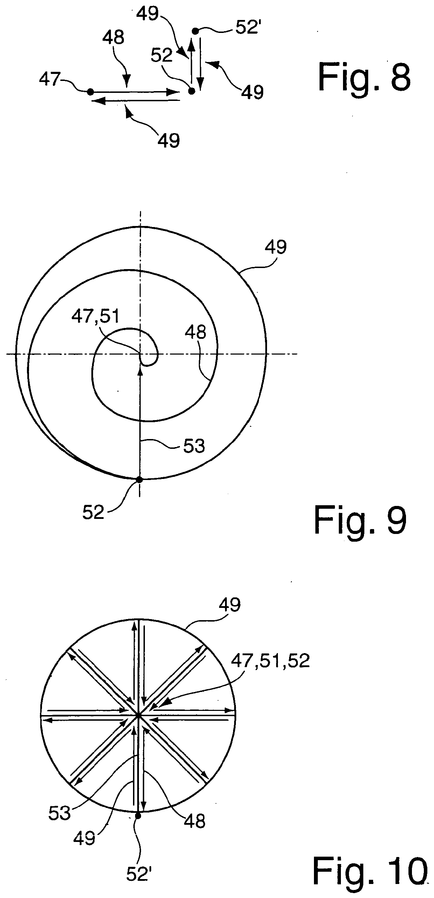

In Figur 8 ist eine weitere alternative Ausführungsform für eine Lösestrategie dargestellt. Hierbei kann eine Art L-förmige Lösestrategie gefahren werden. Ausgehend vom Startpunkt 47 wird entlang einer ersten Achse beispielsweise die Halteeinrichtung 17 oder die Greifereinrichtung 27 bis zum ersten Zwischenpunkt 52 bewegt. Anschließend erfolgt eine zweite Verfahrstrecke 49 bis zu einem zweiten Zwischenpunkt 52', die in der Länge als auch der Richtung von der ersten Verfahrstrecke abweicht. Anschließend erfolgt eine Richtungsumkehr, wobei insbesondere die dritte Verfahrstrecke lediglich entgegengesetzt zur zweiten Verfahrstrecke 49 verläuft, bis die Halteeinrichtung 17 an einem dritten Zwischenpunkt 52" angelangt ist. Anschließend wird die vierte Verfahrstrecke bis zum Endpunkt 51 angesteuert, die lediglich einer Richtungsumkehr der ersten Verfahrstrecke 48 entspricht. Der Endpunkt 51 kann im Startpunkt 47 oder benachbart dazu liegen. Alternativ können auch die Halteeinrichtung 17 und die Greifereinrichtung 27 gleichzeitig angesteuert werden.

Bei dieser Ausführungsform kann auch vorgesehen sein, dass die Verfahrbewegungen auf die Halteeinrichtung 17 und die Greifereinrichtung 27 aufgeteilt werden. Beispielsweise kann die Halteeinrichtung 17 die erste und vierte Verfahrstrecke durchlaufen, wohingegen die Greifereinrichtung 27 die zweite und dritte Verfahrstrecke durchläuft. Eine Vertauschung ist ebenso möglich. Ebenso kann die Aneinanderreihung voneinander abweichen. Darüber hinaus kann beispielsweise ein abweichender Verlauf entlang eines Rechtecks oder Dreiecks abgefahren werden.

Des Weiteren kann alternativ nur eine erste Verfahrstrecke 48 von einem Startpunkt 47 bis zu einem Zwischenpunkt 52, der dann einen Endpunkt 51 bildet, vorgesehen sein. Ebenso kann vom Startpunkt 47 eine erste Verfahrstrecke 48 und zweite Verfahrstrecke 49 durchgeführt werden, so dass beispielsweise der Endpunkt 51 in dem in Figur 8 dargestellten zweiten Zwischenpunkt 52' liegt. Es werden die Verfahrstrecken 48 und 49 nur in eine Richtung durchlaufen. Es ist also nicht erforderlich, dass eine Hin- und Herbewegung der Verfahrstrecken 48, 49 erforderlich ist, sondern es können auch eine oder mehrere in nur eine Richtung erfolgende und aneinander gehängte Verfahrstrecken 48, 49 durchlaufen werden.

In Figur 9 ist eine weitere alternative Lösestrategie dargestellt. Ausgehend von dem Startpunkt 57 wird eine spiralförmige Verfahrstrecke 48 angesteuert, wobei die Verfahrstrecke 48 ein oder mehrere Spiralwindungen aufweisen kann. Diese Spiralwindungen können sowohl im Gegenuhrzeigersinn als auch im Uhrzeigersinn durchlaufen werden. Nachdem die spiralförmige Verfahrstrecke 48 durchlaufen und der Zwischenpunkt 52 erreicht wurde, wird eine zweite Verfahrstrecke 49 angesteuert, welche einem Kreisbogen entspricht, so dass das Ende der zweiten Verfahrstrecke 49 wiederum in dem Zwischenpunkt 52 liegt. Von dort aus wird eine dritte Verfahrstrecke 53 angesteuert, welche zum Endpunkt 51 führt, der beispielsweise im Startpunkt 47 liegt. Es versteht sich, dass diese Lösestrategie wiederum durch die Halteeinrichtung 17 und/oder Greifereinrichtung 27 abgefahren wird.

In Figur 10 ist eine weitere alternative Lösestrategie dargestellt. Ausgehend von einem zentralen Startpunkt 47 wird zunächst entlang einer Geraden eine erste Verfahrstrecke 48 radial nach außen zu einem Zwischenpunkt 52 durchlaufen. Anschließend wird in entgegengesetzter Richtung eine zweite Verfahrstrecke 49 angesteuert, wobei der zweite Zwischenpunkt im Startpunkt 47 liegt. Im Anschluss daran werden die beiden Verfahrstrecken ein- oder mehrmalig wiederholt, so dass eine sternförmige Anordnung der Verfahrstrecken sich ergibt. Am Ende der sternförmigen Verfahrstrecken wird wiederum in Analogie zu Figur 9 ein geschlossener Kreisbogen durchlaufen, um mit einer letzten Verfahrstrecke zum Endpunkt 51 zurückzukehren, der bevorzugt dem Startpunkt 47 entspricht.

Die vorbeschriebenen Lösestrategien umfassen Verfahrstrecken 48, 49, 53, die in der X-Y-Ebene des Werkstücks 12 liegen. Zusätzlich kann eine Überlagerung der Verfahrstrecke in Z-Richtung vorgesehen sein. Darüber hinaus kann zusätzlich noch zu Beginn, während oder am Ende einer oder mehreren Verfahrstrecken eine Ruckelbewegung überlagert werden, um das Lösen einer Verhakung zu erzielen.

## Patentansprüche

1. Verfahren zum Entnehmen eines durch trennendes Bearbeiten an einem plattenförmigen, auf einer Werkstückauflage (16) einer Werkzeugmaschine (11) aufliegenden Werkstücks (12) gebildeten Werkstückteils (36) aus einem Restwerkstück (37),
- bei dem das Werkstück (12) zum Bearbeiten mittels einer Halteeinrichtung (17) fixiert wird und entlang zumindest einer X- oder Y-Richtung in einer X-Y-Ebene des Werkstücks (12) verfahrbar ist,
- bei dem vor oder nach dem Trennen des Werkstückteils (36) aus dem Restwerkstück (37) eine Handlingseinrichtung (26) mit einer Greifereinrichtung (27) zum Werkstückteil (36) in einer Entnahmeposition (32) positioniert wird,
- bei dem die Halteeinrichtung (17) und die Handlingseinrichtung (26) mit der Greifereinrichtung (27) in der Entnahmeposition (32) aktiviert und das Werkstückteil (36) in seiner auf der Werkstückauflage (16) aufliegenden Position ergriffen wird und eine Ausgangssituation für eine Lösestrategie bildet, **dadurch gekennzeichnet, dass**
- bei einer Erkennung einer Verhakung des Werkstückteils (36) mit dem Restwerkstück (37) mittels einer Entladeüberwachungseinrichtung (44) zumindest eine Lösestrategie zur automatisierten Werkstückentnahme eingeleitet wird, bei der zumindest eine Verfahrbewegung mit wenigstens einer vordefinierten Verfahrstrecke (48, 49, 53) der Halteeinrichtung (17), der Greifereinrichtung (27) oder der Halteeinrichtung (17) und der Greifereinrichtung (27) relativ zueinander mit zumindest einer Bewegungskomponente in der X-Y-Ebene angesteuert wird.

2. Verfahren nach Anspruch 1, **dadurch gekennzeichnet, dass** die Verhakung des Werkstückteils (36) mit dem Restwerkstück (37) beim Abheben des Werkstückteils (36) aus dem Restwerkstück (37) durch einen Kraftsensor oder durch ein Lösen des Werkstückteils (36) von der Greifeinrichtung (27) erfasst wird, wobei vorzugsweise das Lösen des Werkstückteils (36) von der Greifereinrichtung (27) mittels der Entladeüberwachungseinrichtung (44) erfasst wird oder die Verhakung optisch in einer Aufsicht auf das Werkstückteil (36) mit der Entladeüberwachungseinrichtung (44) erfasst wird.

3. Verfahren nach Anspruch 1, **dadurch gekennzeichnet, dass** die Verfahrbewegung der Halteeinrichtung (17) und/oder der Greifereinrichtung (27) mit der wenigstens einen Verfahrstrecke (48, 49, 53), vorzugsweise in der X-Y-Ebene gebildet wird, die von einem Startpunkt (47) aus gestartet und in einem Endpunkt (51) beendet wird, der im Startpunkt (47) liegt.

4. Verfahren nach Anspruch 1, **dadurch gekennzeichnet, dass** die Verfahrbewegung der Halteeinrichtung (17) und/oder der Greifereinrichtung (27) mit der wenigstens einen Verfahrstrecke (48, 49, 53), vorzugsweise in der X-Y-Ebene, in einem Startpunkt (47) gestartet und in einem Endpunkt (51) beendet wird, der getrennt zum Startpunkt (47) liegt, vorzugsweise mit einem Abstand, der kleiner als die Breite eines Trennschnittes (39) zwischen dem Werkstückteil (36) und dem Restwerkstück (37) ist.

5. Verfahren nach Anspruch 3 oder 4, **dadurch gekennzeichnet, dass** die Verfahrbewegung mit der zumindest einen Verfahrstrecke (48, 49, 53) der Halteeinrichtung (17) und/oder der Greifereinrichtung (27) zwischen dem Startpunkt (57) und dem Endpunkt (51) mit einem kreisförmigen oder elliptischen oder einem kreisbogenförmigen Bahnverlauf angesteuert wird.

6. Verfahren nach Anspruch 3 oder 4, **dadurch gekennzeichnet, dass** die Verfahrbewegung der Halteeinrichtung (17) und/oder Greifereinrichtung (27) mit zumindest einer ersten Verfahrstrecke (48) von einem Startpunkt (47) zum zumindest einen Zwischenpunkt (52) und die zumindest eine weitere Verfahrstrecke (48, 49, 53) von dem zumindest einen Zwischenpunkt (52) zum Endpunkt (51) angesteuert wird.

7. Verfahren nach Anspruch 6, **dadurch gekennzeichnet, dass** die zumindest eine erste Verfahrstrecke (48) entlang einer Geraden oder eines Kreisbogens in der X-Y-Ebene des Werkstücks (12) und die zumindest zweite Verfahrstrecke (48, 49, 53) entlang eines Kreisbogens oder einer Geraden angesteuert wird oder dass die zumindest eine erste Verfahrstrecke (48) entlang einer Geraden in X- oder Y- Richtung oder in der X-Y-Ebene des Werkstücks (12) und die zumindest eine zweite Verfahrstrecke (49, 53) gegenläufig zur ersten Verfahrstrecke (48) angesteuert wird oder dass die zumindest eine erste Verfahrstrecke (48) mit einer von der zumindest einen zweiten Verfahrstrecke (49, 53) abweichenden Kreisbahn angesteuert wird.

8. Verfahren nach einem der Ansprüche 1 bis 6, **dadurch gekennzeichnet, dass** die zumindest eine erste Verfahrstrecke (48) entlang einer spiralförmigen Bahn angesteuert wird.

9. Verfahren nach einem der Ansprüche 1 bis 6, **dadurch gekennzeichnet, dass** die Verfahrbewegung der Halteeinrichtung (17) und/oder der Greifereinrichtung (27) wenigstens drei Verfahrstrecken (48, 49, 53) mit zumindest zwei Zwischenpunkten (52) umfasst und eine der Verfahrstrecken (48, 49, 53) in einem, vorzugsweise geschlossenen, Kreisbogen angesteuert wird.

10. Verfahren nach einem der vorhergehenden Ansprüche, **dadurch gekennzeichnet, dass** die zumindest eine Verfahrbewegung der Halteeinrichtung (17) und/oder der Greifereinrichtung (27) mit einer Bewegungskomponente entlang einer Verfahrrichtung in Z-Achse zumindest abschnittsweise überlagert wird.

11. Verfahren nach einem der vorhergehenden Ansprüche, **dadurch gekennzeichnet, dass** die Verfahrbewegung mit zumindest einer Verfahrstrecke (48, 49, 53) eine ruckelige Hin- und Herbewegung oder ruckelige Drehbewegung aufweist oder von dieser überlagert wird.

12. Verfahren nach einem der vorhergehenden Ansprüche, **dadurch gekennzeichnet, dass** die Verfahrbewegung der Halteeinrichtung (17) und/oder der Greifereinrichtung (27) mit zumindest einer Verfahrstrecke (48, 49, 53) von einer Hebe- oder Senkbewegung zumindest einer Bauteilkomponente der Werkstückauflage (16) überlagert wird.

13. Verfahren nach einem der vorhergehenden Ansprüche, **dadurch gekennzeichnet, dass** während dem Durchlaufen der Lösestrategie zur automatisierten Werkstückentnahme ein Freiwerden der Verhakung mit der Entladeüberwachungseinrichtung (44) überwacht und beim Erkennen des Freiwerdens des Werkstückteils (36) vom Restwerkstück (37) die Lösestrategie beendet wird.

14. Verfahren nach einem der vorhergehenden Ansprüche, **dadurch gekennzeichnet, dass** nach dem Beenden der Lösestrategie die Position des Werkstückteils (36) in dem Restwerkstück (36) mit der Entladeüberwachungseinrichtung (44) überprüft wird und bei einer weiteren Verhakung zumindest einmal die Lösestrategie wiederholt und beim Bestehen der Verhakung die Werkzeugmaschine (11) stillgesetzt wird oder dass bei einem Lösen der Verhakung der Entladevorgang fortgesetzt wird.

15. Werkzeugmaschine zum trennenden Bearbeiten eines plattenförmigen Werkstücks (12), vorzugsweise eines Blechs, mit einer Werkstückauflage (16) zur Aufnahme des plattenförmigen Werkstücks (12) und einer ortsfesten Bearbeitungseinrichtung (14, 15) zur Trennung des Werkstücks (12) in ein Werkstückteil (36) und ein Restwerkstück (37), mit einer Halteeinrichtung (17), durch welche das Werkstück (12) fixiert und zumindest in einer X- oder Y- Richtung in einer X-Y-Ebene des auf der Werkstückauflage (16) aufliegenden Werkstücks (12) verfahrbar ist und mit einer Handlingseinrichtung (26), welche eine Greifereinrichtung (7) zum Entladen des Werkstückteils (36) umfasst,
- wobei die Haltevorrichtung (17) mit dem Restwerkstück (37) und dem Werkstückteil (36) in einer Entnahmeposition (32) anordenbar ist, in der das Werkstückteil (36) aus dem Restwerkstück (37) mit der Greifereinrichtung (27) entnehmbar ist und
- wobei die Werkzeugmaschine derart ausgestaltet ist, dass in dieser Entnahmeposition (32) die Halteeinrichtung (17) und/oder Greifereinrichtung (27) gemäß der Lösestrategie gemäß einem Verfahren nach einem der Ansprüche 1 bis 14 bei einer, mittels einer Entladeüberwachungseinrichtung (44) erkannten Verhakung des Werkstückteils (36) und/oder des Restwerkstücks (37) mit einer Verfahrbewegung entlang von zumindest einer Verfahrstrecke (48, 49, 53) mit zumindest einer Bewegungskomponente in der X-Y-Ebene verfahren werden.

## Claims

1. Method for the removal of a workpiece part (36) from a residual workpiece (37), said workpiece part being formed by cutting machining on a sheet-like workpiece (12) resting on a workpiece support (16) of a machine tool (11),
- in which the workpiece (12) is fixed for machining by means of a holding device (17) and is moveable along at least one X or Y direction in an X-Y plane of the workpiece (12),
- in which, before or after the cutting of the workpiece part (36) from the residual workpiece (37), a handling device (26) having a gripper device (27) is positioned in a removal position (32) relative to the workpiece part (36),
- in which the holding device (17) and the handling device (26) is activated with the gripper device (27) in a removal position (32) and the workpiece part (36) is gripped in its position resting on the workpiece support (16), and is a starting situation for a detach strategy,
**characterised in that**,
- when an interlocking of the workpiece part (36) with the residual workpiece (37) is detected by means of an unloading monitoring device (44), at least one release strategy for automatic workpiece removal is initiated, in which at least one travelling movement with at least one pre-defined travel path (48, 49, 53) of the holding device (17), the gripper device (27) or the holding device (17) and the gripper device (27) relative to each other is activated with at least one movement component in the X-Y plane.

2. Method according to claim 1, **characterised in that** the interlocking of the workpiece part (36) with the residual workpiece (37) when withdrawing the workpiece part (36) from the residual workpiece (37) is detected by a force sensor or by a release of the workpiece part (36) from the gripper device (27), wherein the release of the workpiece part (36) from the gripper device (27) is preferably detected by means of the unloading monitoring device (44) or the interlocking is detected optically under supervision of the workpiece part (36) with the unloading monitoring device (44).

3. Method according to claim 1, **characterised in that** the travelling movement of the holding device (17) and/or the gripper device (27) is formed with the at least one travel path (48, 49, 53), preferably in the X-Y plane that starts from a starting point (47) and ends in an end point (51) that lies in the start point (47).

4. Method according to claim 1, **characterised in that** the travelling movement of the holding device (17) and/or the gripper device (27) with the at least one travel path (48, 49, 53), preferably in the X-Y plane, starts in a starting point (47) and ends in an end point (51), which lies separately from the starting point (47), preferably at a distance that is smaller than the width of a cut section (39) between the workpiece part (36) and the residual workpiece (37).

5. Method according to claim 3 or 4, **characterised in that** the travelling movement with the at least one travel path (48, 49, 53) of the holding device (17) and/or the gripper device (27) is activated between the starting point (57) and the end point (51) with a circular or elliptical or arc-shaped course.

6. Method according to claim 3 or 4, **characterised in that** the travelling movement of the holding device (17) and/or gripper device (27) with at least one first travel path (48) is activated from a starting point (47) to the at least one intermediate point (52) and with the at least one further travel path (48, 49, 53) from the at least one intermediate point (52) to the end point (51).

7. Method according to claim 6, **characterised in that** the at least one first travel path (48) is activated along a straight line or an arc in the X-Y plane of the workpiece (12), and the at least second travel path (48, 49, 53) is activated along an arc or a straight line or **in that** the at least one first travel path (48) is activated along a straight line in the X or Y direction or in the X-Y plane of the workpiece (12), and the at least one second travel path (49, 53) is activated in the opposite direction to the first travel path (48) or **in that** the at least one first travel path (48) is activated with a circular path that deviates from the at least one second travel path (49, 53).

8. Method according to one of claims 1 to 6, **characterised in that** the at least one first travel path (48) is activated along a spiral-shaped course.

9. Method according to one of claims 1 to 6, **characterised in that** the travelling movement of the holding device (17) and/or the gripper device (27) comprises at least three travel paths (48, 49, 53) having at least two intermediate points (52), and one of the travel paths (48, 49, 53) is activated in a preferably closed arc.

10. Method according to one of the preceding claims, **characterised in that** the at least one travelling movement of the holding device (17) and/or the gripper device (27) is overlaid, at least in sections, with a movement component along a travelling direction in the Z axis.

11. Method according to one of the preceding claims, **characterised in that** the travelling movement with at least one travel path (48, 49, 53) has a jerky movement back and forth or a jerky rotational movement, or is overlaid by this.

12. Method according to one of the preceding claims, **characterised in that** the travelling movement of the holding device (17) and/or the gripper device (27) with at least one travel path (48, 49, 53) is overlaid by a lifting or lowering movement of at least one structural component of the workpiece support (16).

13. Method according to one of the preceding claims, **characterised in that**, during the running of the release strategy for automatic workpiece removal, a freeing of the interlocking is monitoring with the unloading monitoring device (44) and, when the freeing of the workpiece part (36) from the residual workpiece (37) is detected, the release strategy is ended.

14. Method according to one of the preceding claims, **characterised in that**, after the release strategy has ended, the position of the workpiece part (36) in the residual workpiece (36) is checked with the unloading monitoring device (44) and, if there is a further interlocking, the release strategy is repeated at least once and, if the interlocking exists, the machine tool (11) is stopped or, if the interlocking is released, the unloading process is continued.

15. Machine tool for the cutting machining of a sheet-like workpiece (12), preferably a sheet of metal, having a workpiece support (16) for receiving the sheet-like workpiece (12), and a fixed machining device (14, 15) for dividing the workpiece (12) into a workpiece part (36) and a residual workpiece (37), having a holding device (17), with which the workpiece (12) is fixed and can be moved at least in an X or Y direction in an X-Y plane of the workpiece (12) resting on the workpiece support (16), and having a handling device (26) that comprises a gripper device (7) for unloading the workpiece part (36),
**characterised in that**,
- the holding device (17) can be arranged with the residual workpiece (37) and the workpiece part (36) in a removal position (32), in which the workpiece part (36) is able to be removed from the residual workpiece (37) with the gripper device (27), and
- in this removal position (32), the holding device (17) and/or gripper device (27) are able to be moved, for a release strategy when there is an interlocking of the workpiece part (36) and/or the residual workpiece (37), with a travelling movement along at least one travel path (48, 49, 53) with at least one movement component in the X-Y plane.

## Revendications

1. Procédé destiné à retirer d'un reste de pièce (37) une partie de pièce (36) formée par usinage par séparation dans une pièce à usiner (12) en forme de plaque qui repose sur un porte-pièce (16) d'une machine-outil (11),
- lors duquel la pièce à usiner (12) est fixée, pour l'opération d'usinage, grâce à un dispositif de maintien (17) et peut être déplacée le long d'au moins une direction x ou y dans un plan x-y de la pièce à usiner (12),
- lors duquel, avant ou après la séparation de la partie de pièce (36) du reste de pièce (37), un dispositif de manipulation (26) équipé d'un dispositif de préhension (27) est positionné dans une position de prélèvement (32) par rapport à la partie de pièce (36),
- lors duquel le dispositif de maintien (17) et le dispositif de manipulation (26) équipé du dispositif de préhension (27) qui se trouve dans la position de prélèvement (32) sont activés et la partie de pièce (36) est saisie dans la position qu'elle occupe sur le porte-pièce (16), constituant ainsi une situation de départ pour une stratégie de dégagement, **caractérisé en ce que**
- dans le cas où un accrochage survenu entre la partie de pièce (36) et le reste de pièce (37) est détecté par un dispositif de surveillance de déchargement (44), au moins une stratégie de dégagement permettant le prélèvement automatisé de pièces est initialisée dans laquelle est activé au moins un mouvement de déplacement comprenant au moins un trajet de déplacement prédéfini (48, 49, 53) du dispositif de maintien (17), du dispositif de préhension (27) ou du dispositif de maintien (17) et du dispositif de préhension (27) l'un par rapport à l'autre, lequel présente au moins une composante de mouvement dans un plan x-y.

2. Procédé selon la revendication 1, **caractérisé en ce que** l'accrochage entre la partie de pièce (36) et le reste de pièce (37) qui se produit lorsque la partie de pièce (36) est soulevée pour être retirée du reste de pièce (37) est saisi par un capteur de force ou est saisi lorsque la partie de pièce (36) se détache du dispositif de préhension (27), le détachement de la partie de pièce (36) du dispositif de préhension (27) étant saisi de préférence au moyen du dispositif de surveillance de déchargement (44) ou ledit accrochage étant saisi de manière optique par le dispositif de surveillance de déchargement (44) dans une vue de dessus de la partie de pièce (36).

3. Procédé selon la revendication 1, **caractérisé en ce que** le mouvement de déplacement du dispositif de maintien (17) et/ou du dispositif de préhension (27) comprenant ledit au moins un trajet de déplacement (48, 49, 53) est formé de préférence dans le plan x-y et commence à un point de départ (47) et se termine à un point d'arrivée (51) qui se situe audit point de départ (47).

4. Procédé selon la revendication 1, **caractérisé en ce que** le mouvement de déplacement du dispositif de maintien (17) et/ou du dispositif de préhension (27) comprenant ledit au moins un trajet de déplacement (48, 49, 53), de préférence dans le plan x-y, commence à un point de départ (47) et se termine à un point d'arrivée (51) qui est séparé du point de départ (47) de préférence par une distance qui est inférieure à la largeur d'une coupe de séparation (39) entre la partie de pièce (36) et le reste de pièce (37).

5. Procédé selon la revendication 3 ou 4, **caractérisé en ce que** le mouvement de déplacement comprenant ledit au moins un trajet de déplacement (48, 49, 53) du dispositif de maintien (17) et/ou du dispositif de préhension (27) est activé de manière à former, entre le point de départ (57) et le point d'arrivée (51), un parcours de forme circulaire ou de forme elliptique ou en forme d'arc de cercle.

6. Procédé selon la revendication 3 ou 4, **caractérisé en ce que** le mouvement de déplacement du dispositif de maintien (17) et/ou du dispositif de préhension (27) est activé de manière à effectuer au moins un premier trajet de déplacement (48) allant d'un point de départ (47) jusqu'à au moins un point intermédiaire (52) et ledit au moins un autre trajet de déplacement (48, 49, 53) allant dudit au moins un point intermédiaire (52) jusqu'au point d'arrivée (51) .

7. Procédé selon la revendication 6, **caractérisé en ce que** ledit au moins un premier trajet de déplacement (48) est activé le long d'une ligne droite ou d'un arc de cercle dans le plan x-y de la pièce à usiner (12) et ledit au moins un deuxième trajet de déplacement (48, 49, 53) est activé le long d'un arc de cercle ou d'une ligne droite, ou **en ce que** ledit au moins un premier trajet de déplacement (48) est activé le long d'une ligne droite en direction x ou en direction y ou dans le plan x-y de la pièce à usiner (12), et ledit au moins un deuxième trajet de déplacement (49, 53) est activé dans le sens contraire au premier trajet de déplacement (48), ou **en ce que** ledit au moins un premier trajet de déplacement (48) est activé de manière à former un parcours circulaire qui diffère dudit au moins un deuxième trajet de déplacement (49, 53).

8. Procédé selon l'une quelconque des revendications 1 à 6, **caractérisé en ce que** ledit au moins un premier trajet de déplacement (48) est activé le long d'un parcours hélicoïdal.

9. Procédé selon l'une quelconque des revendications 1 à 6, **caractérisé en ce que** le mouvement de déplacement du dispositif de maintien (17) et/ou du dispositif de préhension (27) comprend au moins trois trajets de déplacement (48, 49, 53) présentant au moins deux points intermédiaires (52) et qu'un des trajets de déplacement (48, 49, 53) est activé de manière à former un arc de cercle qui est de préférence fermé.

10. Procédé selon l'une quelconque des revendications précédentes, **caractérisé en ce qu'**audit au moins un mouvement de déplacement du dispositif de maintien (17) et/ou du dispositif de préhension (27) est superposée, au moins par segments, une composante de mouvement le long d'une direction de déplacement située dans l'axe z.

11. Procédé selon l'une quelconque des revendications précédentes, **caractérisé en ce que** le mouvement de déplacement comprenant au moins un trajet de déplacement (48, 49, 53) présente un mouvement de va-et-vient saccadé ou un mouvement de rotation saccadé ou que ce dernier vient se superposer audit mouvement de déplacement.

12. Procédé selon l'une quelconque des revendications précédentes, **caractérisé en ce qu'**au mouvement de déplacement du dispositif de maintien (17) et/ou du dispositif de préhension (27) qui comprend au moins un trajet de déplacement (48, 49, 53) vient se superposer un mouvement de montée ou de descente d'au moins un élément constitutif du porte-pièce (16) .

13. Procédé selon l'une quelconque des revendications précédentes, **caractérisé en ce que** pendant l'exécution de la stratégie de dégagement permettant le prélèvement automatisé de pièces, la libération des pièces accrochées est surveillée par le dispositif de surveillance de déchargement (44) et lorsque ledit dispositif détecte que la partie de pièce (36) est libérée du reste de pièce (37), la stratégie de dégagement est terminée.

14. Procédé selon l'une quelconque des revendications précédentes, **caractérisé en ce que**, une fois que la stratégie de dégagement est terminée, la position occupée par la partie de pièce (36) dans le reste de pièce (36) est contrôlée par le dispositif de surveillance de déchargement (44) et, si un nouvel accrochage se produit, la stratégie de dégagement est répétée au moins une fois et, dans le cas où l'accrochage perdure, la machine-outil (11) est mise à l'arrêt ou, dans le cas où l'accrochage disparaît, le processus de déchargement se poursuit.

15. Machine-outil destinée à usiner par séparation une pièce à usiner (12) en forme de plaque, de préférence une tôle, pourvue d'un porte-pièce (16) destinée à recevoir la pièce à usiner (12) en forme de plaque et d'un dispositif d'usinage fixe (14, 15) destiné à séparer la pièce à usiner (12) en une partie de pièce (36) et un reste de pièce (37), pourvue d'un dispositif de maintien (17) grâce auquel la pièce à usiner (12) est fixée et peut être déplacée au moins dans une direction x ou y, et ce dans un plan x-y de la pièce à usiner (12) qui repose sur le porte-pièce (16), et pourvue d'un dispositif de manipulation (26) qui comprend un dispositif de préhension (7) destiné à décharger la partie de pièce (36),
- le dispositif de maintien (17) pourvu du reste de pièce (37) et de la partie de pièce (36) pouvant être disposé dans une position de prélèvement (32) dans laquelle la partie de pièce (36) peut être retirée du reste de pièce (37) par le dispositif de préhension (27) et
- la machine-outil étant conçue de manière telle que dans ladite position de prélèvement (32), le dispositif de maintien (17) et/ou le dispositif de préhension (27), lorsqu'un accrochage survenu avec la partie de pièce (36) et/ou le reste de pièce (37) est détecté par un dispositif de surveillance de déchargement (44), peut/peuvent être déplacé(s) conformément à la stratégie de dégagement selon l'une quelconque des revendications 1 à 14 en vue d'effectuer un mouvement de déplacement le long d'au moins un trajet de déplacement (48, 49, 53) présentant au moins une composante de déplacement dans le plan x-y.
